(19) Europäisches Patentamt
European Patent Office
Office européen des brevets

(11) EP 3 528 369 A1

(12) **DEMANDE DE BREVET EUROPEEN**

(43) Date de publication:
21.08.2019 Bulletin 2019/34

(51) Int Cl.:
*H02K 3/28* (2006.01)        *H02K 3/12* (2006.01)

(21) Numéro de dépôt: 19150536.1

(22) Date de dépôt: 07.01.2019

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 16.02.2018 FR 1851334

(71) Demandeurs:
• IFP Energies nouvelles
92852 Rueil-Malmaison Cedex (FR)
• Mavel S.r.l.
11026 Pont Saint Martin (AO) (IT)

(72) Inventeurs:
• FAVRE, Luca
11010 Valpelline (AO) (IT)
• GAUSSENS, Benjamin
92852 Rueil-Malmaison Cedex (FR)
• DIB, WISSAM
92852 Rueil-Malmaison Cedex (FR)
• BOISSON, Julien
92500 Rueil-Malmaison (FR)
• BETTONI, Davide
Settimo Vittone To Italy (IT)

(74) Mandataire: IFP Energies nouvelles
Département Propriété Industrielle
Rond Point de l'échangeur de Solaize
BP3
69360 Solaize (FR)

(54) **STATOR D'UNE MACHINE ELECTRIQUE AVEC DOUBLE INSERTION DE BOBINAGES DANS LES ENCOCHES**

(57) La présente invention concerne un stator de machine électrique comprenant des encoches (2) et des bobinages (5, 5') connectées à des phases électriques. L'agencement des bobinages (5, 5') d'une phase électrique comprend une association en parallèle de branches (4), dans lesquelles deux bobinages (5, 5')sont associés en série. De plus, dans chaque encoche (2) sont insérées des boucles de deux bobinages (5, 5') de deux branches (4) en parallèle.

Figure 3

EP 3 528 369 A1

**Description**

La présente invention concerne le domaine des machines électriques, en particulier des machines électriques synchro-réluctante assistés par des aimants (à réluctance variable).

Généralement, une machine électrique comporte une partie fixe (stator) et une partie rotative (rotor) disposées coaxialement l'une dans l'autre.

Le rotor peut être formé d'un corps de rotor avec un empilage de tôles placé sur un arbre de rotor. Ces tôles comprennent des logements pour des aimants permanents et des perforations pour créer de barrières de flux permettant de diriger radialement le flux magnétique des aimants vers le stator.

Ce rotor est généralement logé à l'intérieur d'un stator qui porte des bobinages électriques.

Généralement, le stator est de forme annulaire et est logé à l'intérieur d'un support tubulaire pour y être fixé.

Ce stator comprend une pluralité d'encoches radiales ouvertes en direction du rotor et s'étendant tout au long du pourtour du stator. Ces encoches sont prévues pour recevoir les bobinages d'induit qui sont introduits dans le stator par la face ouverte des encoches puis y sont fixés par tous moyens connus.

Lors du fonctionnement d'une telle machine électrique, les bobinages sont parcourus par un courant électrique pour générer le champ magnétique nécessaire à l'entraînement en rotation du rotor.

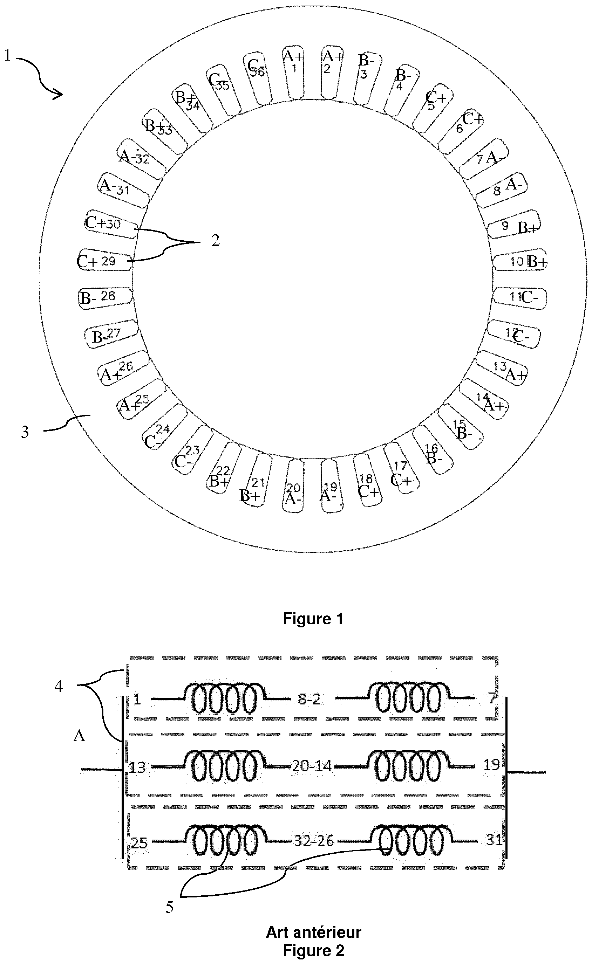

La figure 1 représente un stator 1 d'une machine à réluctance variable entraîné par trois phases électriques A, B et C. La stator 1 comporte une forme extérieur annulaire. Le stator 1 comporte trente-six encoches 2 dirigées vers le centre et une couronne 3 externe. Les encoches 2 sont généralement régulièrement réparties sur la circonférence interne du stator 1. Les encoches sont numérotées de 1 à 36. Les encoches 2 logent les bobinages (non représentés). Sur cette figure est représentée de manière schématique les phases des bobinages passant les encoches. Ces phases sont représentées par les lettres A, B et C et par un signe + ou -, pour indiquer quelle phase passe à travers les encoches.

L'agencement des bobinages dans les encoches du stator influe sur les flux magnétiques et sur les performances de la machine électrique. C'est pourquoi, plusieurs agencements de bobinages ont été développées.

Par exemple, le brevet US 6417592 décrit un agencement en série et parallèle des bobines pour avoir une capacité de courant élevée.

La demande de brevet JP 2015061370 concerne un agencement des bobinages, dans lequel chaque encoche comprend deux bobinages appartenant à des phases différentes. Un tel agencement peut être complexe à mettre en oeuvre.

La figure 2 illustre un agencement généralement utilisé des bobinages de la phase A. Cet exemple est adapté à un stator comportant trente-six encoches tel qu'illustré à la figure 1. Pour cet agencement, la phase A comprend trois branches 4 en parallèle. Chaque branche 4 comprend deux bobinages 5 en série. Les chiffres indiqués aux extrémités des bobinages 5 correspondent au numéro des encoches (cf. figure 1) dans lesquelles passent les bobinages 5. Ainsi, dans cette configuration chaque encoche ne comporte qu'un seul bobinage.

Ce type d'agencement donne satisfaction du fait notamment que cet agencement est simple à installer. Toutefois, il est souhaitable d'améliorer les performances de la machine électrique, notamment en termes de réduction des pertes AC (pertes par courants de Foucault) et de refroidissement thermique (en effet pour cet agencement, les densités de courant dans l'encoche peuvent être élevées ce qui augmente l'échauffement thermique).

Afin de pallier ces inconvénients, la présente invention concerne un stator de machine électrique comprenant des encoches et des bobinages connectées à des phases électriques. L'agencement des bobinages d'une phase électrique comprend une association en parallèle de branches, dans lesquelles deux bobinages sont associés en série. De plus, dans chaque encoche sont insérées des boucles de deux bobinages de deux branches en parallèle. Cet agencement simple permet un diminuer le coefficient de remplissage ; ce qui permet d'avoir des densités de courants plus faibles dans les encoches ce qui facilite son refroidissement thermique. En outre, cet agencement permet, grâce à la double insertion dans les encoches, une réduction des pertes AC.

**Le dispositif selon l'invention**

L'invention concerne un stator d'une machine électrique comprenant une pluralité d'encoches pour l'insertion de bobinages, lesdits bobinages étant reliés à moins une phase électrique, chaque phase électrique étant connectée à une association en parallèle d'une pluralité de branches, chaque branche étant formé de deux bobinages en série, chaque bobinage comprenant une pluralité de boucles insérées dans deux encoches. Chaque encoche comporte l'insertion des boucles de deux bobinages de deux branches en parallèle.

Selon un mode de réalisation, au sein de ladite association en parallèle desdites branches, chaque branche possède une branche ayant un agencement identique desdits bobinages.

Conformément à une mise en oeuvre, chaque bobinage comporte entre cinq et quinze boucles, de préférence neuf boucles.

Selon un aspect, chaque boucle est formée d'une pluralité de fils, de préférence entre trois et vingt fils, et plus préférentiellement quatorze fils.

Avantageusement, au sein de chaque branche, les boucles du deuxième bobinage sont insérées dans des encoches voisines aux encoches, dans lesquelles sont insérées les boucles du premier bobinage de ladite branche.

De préférence, lesdites boucles dudit deuxième bobinage sont insérées dans les encoches intérieures séparant les encoches dans lesquelles sont insérées lesdites boucles dudit premier bobinage.

Conformément à une caractéristique, au sein de chaque encoche, lesdites boucles desdits bobinages sont positionnées dans la même direction.

Alternativement, au sein de chaque encoche, lesdites boucles desdits bobinages sont positionnées dans des directions opposées.

Conformément à un mode de réalisation, ledit stator comporte un nombre d'encoches multiple de douze.

Selon une mise en oeuvre de l'invention, un moyen de séparation est inséré dans chaque encoche pour séparer lesdits bobinages.

Selon un aspect, chaque encoche est recouverte d'une isolation en papier.

De manière avantageuse, chaque encoche est fermée par une lame.

En outre, l'invention concerne une machine électrique à réluctance variable comprenant un rotor et un stator selon l'une des caractéristiques précédentes.

**Présentation succincte des figures**

D'autres caractéristiques et avantages du dispositif selon l'invention, apparaîtront à la lecture de la description ci-après d'exemples non limitatifs de réalisations, en se référant aux figures annexées et décrites ci-après.

La figure 1, déjà décrite, illustre un stator d'une machine électrique synchro-réluctante.
La figure 2, déjà décrite, illustre un agencement des bobinages pour une phase de la machine électrique selon l'art antérieur.
La figure 3 illustre un agencement des bobinages pour une phase de la machine électrique selon un mode de réalisation de l'invention.
La figure 4 illustre un agencement des boucles de bobinage au sein d'une encoche selon une première variante de réalisation de l'invention.
La figure 5 illustre un agencement des boucles de bobinage au sein d'une encoche selon une deuxième variante de réalisation de l'invention.

**Description détaillée de l'invention**

La présente invention concerne un stator d'une machine électrique, en particulier d'une machine électrique à réluctance variable.

Le stator peut avoir une forme annulaire et être logé à l'intérieur d'un support tubulaire pour y être fixé.

Le stator comprend une pluralité d'encoches radiales ouvertes en direction du rotor et s'étendant tout au long du pourtour du stator. Ces encoches sont prévues pour recevoir les bobinages d'induit qui sont introduits dans le stator par la face ouverte des encoches puis y sont fixés par tous moyens connus.

Le stator selon l'invention peut être conforme au stator illustré en figure 1. Il peut notamment comporter trente-six encoches, par exemple pour une machine avec six pôles. Alternativement, le stator peut comporter quarante-huit encoches, par exemple pour une machines avec huit pôles. D'une manière générale, le stator peut comporter un nombre d'encoches multiple de douze. Ces configurations sont particulièrement adaptés pour une machine électrique synchro-réluctante.

Le stator peut être prévu pour l'agencement de bobinages connectés à trois phases électriques. Au sein des encoches, une répartition régulière des phases peut être prévue. Par exemple, il peut être prévu une alternance des phases par paire. En d'autres termes, deux encoches consécutives peuvent comprendre des bobinages reliés à la phase A, suivies de deux encoches consécutives avec des bobinages reliés à la phase B, suivies de deux encoches consécutives avec des bobinages reliés à la phase C, elles-mêmes suivies de deux encoches consécutives avec des bobinages reliés à la phase A et ainsi de suite.

Selon un aspect de l'invention, le stator peut être formé par une pluralité de tôles plates empilées et assemblés.

L'invention concerne un agencement particulier des bobinages dans les encoches. Cet agencement est similaire pour chaque phase électrique.

Au sein du stator, chaque phase électrique est connectée à une association en parallèles de branches. Chaque branche est formé d'une association en série de deux bobinages. Chaque bobinage comporte une pluralité de boucles. En d'autres termes, la phase électrique est connectée à des branches, les branches comportant deux bobinages, et les bobinages étant formés d'une pluralité de boucles (plusieurs tours).

Selon l'invention, chaque encoche du stator comporte le passage (l'insertion) des boucles de deux bobinages de deux branches en parallèle. En d'autres termes, chaque encoche comporte le passage (l'insertion) de deux bobinages connectés à la même phase électrique et situés sur des branches parallèles. Pour cela, des boucles de deux bobinages en parallèle sont insérées dans une encoche. De manière avantageuse, chaque encoche ne comporte uniquement l'insertion de deux bobinages en parallèle.

Cet agencement spécifique des bobinages permet de réduire les pertes AC, et d'augmenter le coefficient de remplissage de l'encoche, ce qui permet d'avoir des densités de courants plus faible dans l'encoche, ce qui facilite son refroidissement thermique. Le coefficient de remplissage Kb peut être défini par une formule du type :

$$Kb = \frac{Nt \times Nf \times \pi \times \frac{D}{2}}{S}$$

avec Nt : le nombre de tours (boucles) dans une encoche, Nf le nombre de fils d'une boucle, D le diamètre des fils, S la surface de l'encoche.

Selon un mode de réalisation de l'invention, au sein de l'association en parallèle des branches, chaque branche peut posséder une branche ayant un agencement identique des bobinages. On appelle un agencement identique l'association en série des bobinages qui passent à travers les mêmes encoches. Ainsi, dans l'agencement des bobinages d'une phase électrique, chaque branche est doublée : il y a deux branches ayant des bobinages insérés dans les mêmes encoches. Par exemple, si une branche comprend un premier bobinage inséré dans les encoches de numéro N et M, et un deuxième bobinage inséré dans les encoches de numéro P et Q, alors l'association de branches comporte une deuxième branche comprenant un premier bobinage inséré dans les encoches de numéro N et M, et un deuxième bobinage inséré dans les encoches de numéro P et Q. Cet agencement permet un montage simplifié du bobinage dans les encoches.

Conformément à une mise en oeuvre de l'invention, chaque bobinage peut comprendre entre cinq et quinze boucles, de préférence neuf boucles. Le nombre de boucles peut être déterminé pour obtenir les performances souhaitées de la machine électrique, par exemple le couple et la puissance.

Selon un aspect de l'invention, chaque boucle peut être formée d'une pluralité de fils, notamment de fils en cuivre. Les fils de cuivre peuvent être recouvert d'un vernis afin d'isoler électriquement les fils de cuivre les uns sur les autres.

De préférence, chaque boucle comporte entre trois et vingt fils. De manière très préférée, chaque boucle comporte entre douze et seize fils. En effet, un nombre de fils supérieur à vingt génère des difficultés pour insérer les boucles dans les encoches.

Avantageusement, au sein de chaque branche, les boucles du deuxième bobinage peuvent être insérées dans des encoches voisines aux encoches, dans lesquelles sont insérées les boucles du premier bobinage. En d'autres termes, si les boucles du premier bobinage sont insérées dans les encoches de numéro N et M, alors les boucles du deuxième bobinage sont insérées dans les encoches de numéro N+1 ou N-1 et M+1 ou M-1. Ainsi, les bobinages de deux encoches consécutives du rotor sont connectés à la même phase. Cette configuration constitue une manière de réaliser un bobinage distribué.

De préférence, les boucles du deuxième bobinage sont insérées dans les encoches intérieures séparant les encoches dans lesquelles sont insérées les boucles du premier bobinage. En d'autres termes, si les boucles du premier bobinage sont insérées dans les encoches numéro N et M, alors les boucles du deuxième bobinage sont insérées dans les encoches de numéro N+1 et M-1. Cet agencement permet une simplicité dans la réalisation du bobinage.

Pour une distribution régulière des phases, pour le mode de réalisation pour lequel le stator comporte un nombre d'encoches multiple de douze, les boucles des premiers bobinages des branches peuvent être espacées de sept encoches. Ainsi, si les boucles d'un premier bobinage sont insérées dans une encoche de numéro N, alors les boucles du premier bobinage sont également insérées dans l'encoche N+7.

Selon un exemple de réalisation combinant les trois derniers modes de réalisation décrits ci-dessus, les boucles du premier bobinage d'une branche peuvent être insérées dans les encoches numéro N et N+7, et les boucles du deuxième bobinage de cette branche peuvent être insérées dans les encoches numéros N+1 et N+6.

Pour le mode de réalisation pour lequel le stator comporte un nombre d'encoches multiple de douze, les branches d'une association peuvent être réparties de manière régulière dans les encoches avec un espacement de douze encoches entre les branches. Par exemple, si deux branches sont insérées dans une encoche de numéro N, alors deux branches sont insérées dans une encoche de numéro N+12, et deux branches sont insérées dans une encoche de numéro N+24 (si le stator comporte au moins trente-six encoches), et deux branches sont insérées dans une encoche de numéro N+36 (si le stator comporte au moins quarante-huit encoches), etc.

Conformément à une mise en oeuvre de l'invention combinant les modes de réalisation précédemment décrits, pour lequel le stator comporte trente-six encoches et pour lequel les bobinages sont reliées à trois phases électriques, chaque phase électrique est connectée à six branches en parallèle avec :

- une première branche dont les boucles du premier bobinage sont insérées dans les encoches N et N+7, et dont les boucles du deuxième bobinage sont insérées dans les encoches N+1 et N+6,
- une deuxième branche identique à la première branche,
- une troisième branche dont les boucles du premier bobinage sont insérées dans les encoches N+12 et N+19, et dont les boucles du deuxième bobinage sont insérées dans les encoches N+13 et N+18,
- une quatrième branche identique à la troisième branche,
- une cinquième branche dont les boucles du premier bobinage sont insérées dans les encoches N+24 et N+31, et dont les boucles du deuxième bobinage sont insérées dans les encoches N+25 et N+30,
- une sixième branche identique à la cinquième branche, et
- N=1 pour la phase électrique A, N=3 pour la phase électrique B et N=5 pour la phase électrique C.

Pour un mode de réalisation avec un stator ayant quarante-huit encoches, l'association d'une phase peut comporter huit branches.

Selon un exemple de réalisation, l'agencement des six premières branches peut être similaire à celle décrite ci-dessus avec en outre :

- une septième branche dont les boucles du premier bobinage sont insérées dans les encoches N+36 et N+43, et dont les boucles du deuxième bobinage sont insérées dans les encoches N+37 et N+42, et
- une huitième branche identique à la septième branche.

Selon un mode de réalisation de l'invention, les deux bobinages insérés dans une encoche peuvent être insérés dans des directions opposées. Ce mode de réalisation permet de réduire les pertes AC (par courants de Foucault).

Alternativement, les deux bobinages insérés dans une encoche peuvent être insérés dans des directions identiques. Cette variante est plus simple à réaliser techniquement, car l'insertion des bobines se fait de manière identique.

Pour séparer les deux bobinages insérés dans une encoche, il peut être prévu des moyens de séparation dans chaque encoche entre les deux bobinages.

Selon un aspect de l'invention, les encoches peuvent être recouverte d'une isolation en papier, afin de réaliser une isolation électrique.

Conformément à une caractéristique de l'invention, les encoches peuvent comprendre une lame permettant de fermer l'encoche, une fois que les bobinages y sont insérés. La lame peut avoir sensiblement une forme en V. La lame peut être réalisé dans le même matériau que l'isolation en papier.

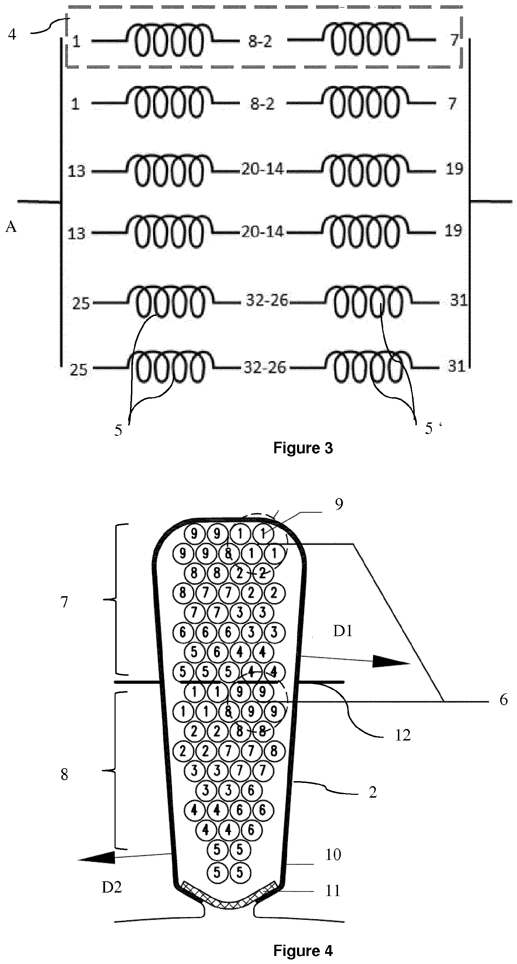

La figure 3 illustre, schématiquement et de manière non limitative un agencement des bobinages pour une phase électrique A d'un stator selon un mode de réalisation de l'invention. Sur cette figure les numéros aux extrémités des bobinages correspondent aux numéros des encoches (cf. figure 1) dans lesquelles sont insérés les bobinages 5, 5'. L'agencement de la figure 3 est adapté au stator illustré en figure 1 qui comporte trente-six encoches. Cet agencement comporte six branches 4 en parallèle. Chaque branche 4 comporte un premier bobinage 5 et un deuxième bobinage 5'.

Au sein de cet agencement, les deux premières (du haut en bas) branches 4 sont identiques, les troisième et quatrième branches 4 sont identiques, et les cinquième et sixième branches 4 sont identiques. En effet, la première branche 4 comprend un premier bobinage 5 avec une pluralité de boucles insérées dans les encoches de numéro 1 et 8 et un deuxième bobinage 5' avec une pluralité de boucles insérées dans les encoches de numéro 2 et 7, et la deuxième branche 4 comprend un premier bobinage 5 avec une pluralité de boucles insérées dans les encoches de numéro 1 et 8 et un deuxième bobinage 5' avec une pluralité de boucles insérées dans les encoches de numéro 2 et 7.

Les troisième et quatrième branches sont décalées de douze encoches par rapport aux première et deuxième branche (encoches de numéro 13-20 et 14-19), et les cinquième et sixième branches sont décalées de douze encoches par rapport aux troisième et quatrième branches (encoches de numéro 25-32 et 26-31).

De plus, les deuxièmes bobinages 5' sont insérées dans des encoches voisines de celles dans lesquelles sont insérés les premiers bobinages 5. En outre, elle sont situés à l'intérieur dans l'espacement entre les encoches d'insertion du premier bobinage 5.

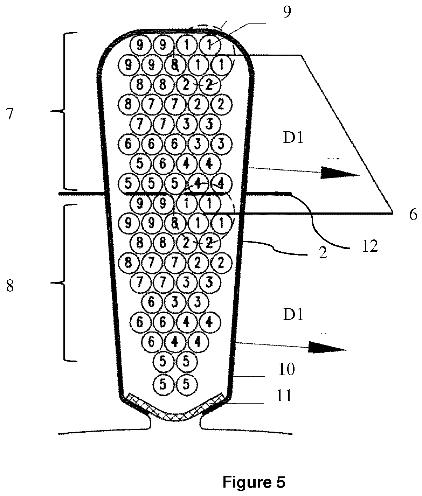

Les figures 4 et 5 illustrent, schématiquement et de manière non limitative, le remplissage d'une encoche 2 par les fils des bobinages selon deux variantes de réalisation. Dans la partie supérieure 7 de l'encoche 2 sont regroupés les fils 9 d'un premier bobinage d'une première branche, et dans la partie inférieure 8 de l'encoche 2 sont regroupés les fils 9 d'un deuxième bobinage d'une deuxième branche. Sur ces figures, les numéros 1 à 9 inscrits dans les fils 9 correspondent aux numéros des boucles 6 passant par l'encoche 2. Ainsi, chaque boucle 6 comporte quatre fils 9 de section circulaire. Des exemples de boucles 6 sont représentés par des cercles en pointillés.

En outre, sur ces figures sont représentés également :

- la séparation 12 entre les deux bobinages,
- l'isolation papier 10 de l'encoche 2, et
- la lame 11 en V fermant l'encoche 2.

La première variante de la figure 4 correspond à une variante dans laquelle les boucles 6 du bobinage dans la partie supérieure 7 de l'encoche 2 sont positionnées dans une direction D1, qui est opposée à la direction D2 des boucles 6 de bobinage dans la partie inférieure 8 de l'encoche 2. Cette direction opposée se traduit notamment par un agencement opposé des boucles 6 : les boucles numéro 1 à 4 qui étaient à droite dans la partie supérieure 7 se retrouvent à gauche dans la partie inférieure 8, et les boucles numéro 9 à 6 qui étaient à gauche dans la partie supérieure 7 se retrouvent à droite dans la partie inférieure 8.

La deuxième variante de la figure 5 correspond à une variante dans laquelle les boucles 6 du bobinage dans la partie supérieure 7 de l'encoche 2 sont positionnées dans une direction D1, qui est identique à la direction D1 des boucles 6 de bobinage dans la partie inférieure 8 de l'encoche 2. Cette direction identique se traduit notamment par un agencement sensiblement identique des boucles 6 : les boucles numéro 1 à 4 qui étaient à droite dans la partie supérieure 7 se retrouvent à droite dans la partie inférieure 8, et les boucles numéro 9 à 6 qui étaient à gauche dans la partie supérieure 7 se retrouvent à gauche dans la partie inférieure 8.

En outre, l'invention concerne une machine électrique, en particulier une machine synchro-réluctante (à réluctance variable), comprenant un rotor et un stator selon l'une quelconque des combinaisons de variantes décrites ci-dessus. Ce rotor est généralement logé à l'intérieur du stator.

Le rotor peut être formé d'un corps de rotor avec un empilage de tôles placé sur un arbre de rotor. Ces tôles comprennent des logements pour des aimants permanents et des perforations pour créer de barrières de flux permettant de diriger radialement le flux magnétique des aimants vers le stator.

Exemple numérique

Les caractéristiques et avantages de l'invention apparaîtront plus clairement à la lecture de l'exemple d'application ci-après.

Pour cet exemple, on considère un stator avec trente-six encoches tel qu'illustré en figure 1, avec un agencement des bobinages selon le mode de réalisation de l'invention illustré en figure 3.

De plus, le stator comporte des encoches ayant une surface de 138 mm$^2$. Les fils sont des fils de diamètre D=0.56 mm, chaque bobinage est composé de 9 boucles, donc chaque encoche comporte 18 boucles, et chaque boucle est constitué de 14 fils en parallèle.

Pour cette configuration, le coefficient de remplissage Kb atteint 0.45 (pour une encoche avec une seule bobine, le coefficient de remplissage Kb est compris entre 0.4 et 0.45), ce qui permet d'avoir des densités de courants plus faible dans l'encoche, ce qui facilite son refroidissement thermique.

**Revendications**

1. Stator d'une machine électrique comprenant une pluralité d'encoches (2) pour l'insertion de bobinages (5), lesdits bobinages étant reliés à moins une phase électrique (A, B, C), chaque phase électrique (A, B, C) étant connectée à une association en parallèle d'une pluralité de branches (4), chaque branche (4) étant formé de deux bobinages (5, 5') en série, chaque bobinage (5, 5') comprenant une pluralité de boucles insérées dans deux encoches (2), **caractérisé en ce que** chaque encoche (2) comporte l'insertion des boucles de deux bobinages (5, 5') de deux branches (4) en parallèle.

2. Stator d'une machine électrique selon la revendication 1, dans lequel au sein de ladite association en parallèle desdites branches (4), chaque branche (4) possède une branche (4) ayant un agencement identique desdits bobinages (5, 5').

3. Stator d'une machine électrique selon l'une des revendications précédentes, dans lequel chaque bobinage (5, 5') comporte entre cinq et quinze boucles (6), de préférence neuf boucles (6).

4. Stator d'une machine électrique selon l'une des revendications précédentes, dans lequel chaque boucle (6) est formée d'une pluralité de fils (9), de préférence entre trois et vingt fils (9), et plus préférentiellement quatorze fils (9).

5. Stator d'une machine électrique selon l'une des revendications précédentes, dans lequel au sein de chaque branche (4), les boucles (6) du deuxième bobinage (5') sont insérées dans des encoches (2) voisines aux encoches (2), dans lesquelles sont insérées les boucles (6) du premier bobinage (5) de ladite branche (4).

6. Stator d'une machine électrique selon la revendication 5, dans lequel lesdites boucles (6) dudit deuxième bobinage (5') sont insérées dans les encoches (2) intérieures séparant les encoches (2) dans lesquelles sont insérées lesdites boucles (6) dudit premier bobinage (5).

7. Stator d'une machine électrique selon l'une des revendications précédentes, dans lequel au sein de chaque encoche (2), lesdites boucles (6) desdits bobinages (5, 5') sont positionnées dans la même direction (D1).

8. Stator d'une machine électrique selon l'une des revendications 1 à 6, dans lequel au sein de chaque encoche (2), lesdites boucles (6) desdits bobinages (5, 5') sont positionnées dans des directions opposées (D1, D2).

9. Stator d'une machine électrique selon l'une des revendications précédentes, dans lequel ledit stator (1) comporte un nombre d'encoches (2) multiple de douze.

10. Stator d'une machine électrique selon l'une des revendications précédentes, dans lequel un moyen de séparation (12) est inséré dans chaque encoche (2) pour séparer lesdits bobinages (5, 5').

11. Stator d'une machine électrique selon l'une des revendications précédentes, dans lequel chaque encoche (2) est recouverte d'une isolation en papier (10).

12. Stator d'une machine électrique selon l'une des revendications précédentes, dans lequel chaque encoche (2) est fermée par une lame (11)

13. Machine électrique à réluctance variable comprenant un rotor et un stator (1) selon l'une des reven-

**EP 3 528 369 A1**

dications précédentes.

**Figure 1**

**Art antérieur**
**Figure 2**

**Figure 3**

**Figure 4**

Figure 5

Europäisches
Patentamt

European
Patent Office

Office européen
des brevets

# RAPPORT DE RECHERCHE EUROPEENNE

Numéro de la demande

EP 19 15 0536

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2014/319953 A1 (RAHMAN KHWAJA M [US] ET AL) 30 octobre 2014 (2014-10-30) * alinéas [0005], [0017], [0018], [0025], [0026]; figures 1-6 * | 1-4,7-13 | INV. H02K3/28 H02K3/12 |
| X | US 2009/140594 A1 (OGAWA SHINICHI [JP] ET AL) 4 juin 2009 (2009-06-04) * alinéas [0046], [0047], [0050], [0055]; figures 6-9 * | 1,3-13 | |
| X | US 2018/026487 A1 (KOGA KIYOTAKA [JP]) 25 janvier 2018 (2018-01-25) * alinéa [0029]; figures 1-6 * | 1,3-13 | |
| X | DE 10 2015 222367 A1 (VOLKSWAGEN AG [DE]) 18 mai 2017 (2017-05-18) * alinéa [0032]; figures 1-2 * | 1-6,8-13 | |
| A | US 2006/238058 A1 (KOIDE KEISUKE [JP] ET AL) 26 octobre 2006 (2006-10-26) * alinéas [0135], [0152]; figure 2A * | 8 | |
| A | EP 2 026 450 A2 (OERLIKON TEXTILE GMBH & CO KG [DE]) 18 février 2009 (2009-02-18) * alinéas [0006], [0009], [0012], [0014]; figure 1 * | 4,8 | DOMAINES TECHNIQUES RECHERCHES (IPC) H02K |
| A | US 2011/198960 A1 (TANG YIFAN [US] ET AL) 18 août 2011 (2011-08-18) * figures 1, 4, 5 * | 6,10,12 | |
| A | JP 2011 125135 A (MITSUBISHI ELECTRIC CORP) 23 juin 2011 (2011-06-23) * figure 6 * | 10,11 | |
| A | US 5 898 251 A (MOCHIZUKI MOTOYASU [JP] ET AL) 27 avril 1999 (1999-04-27) * figure 1 * | 6 | |

-/--

Le présent rapport a été établi pour toutes les revendications

| Lieu de la recherche | Date d'achèvement de la recherche | Examinateur |
|---|---|---|
| La Haye | 20 février 2019 | Georgopoulos, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 15 0536

**DOCUMENTS CONSIDERES COMME PERTINENTS**

| Catégorie | Citation du document avec indication, en cas de besoin, des parties pertinentes | Revendication concernée | CLASSEMENT DE LA DEMANDE (IPC) |
|---|---|---|---|
| A | DE 10 2007 025938 A1 (SIEMENS AG [DE]) 18 décembre 2008 (2008-12-18) * figure 1 * ----- | 6 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 20 février 2019 | Georgopoulos, P |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 15 0536

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-02-2019

| Document brevet cité au rapport de recherche | Date de publication | Membre(s) de la famille de brevet(s) | Date de publication |
|---|---|---|---|
| US 2014319953 A1 | 30-10-2014 | CN 104124803 A<br>DE 102014105428 A1<br>US 2014319953 A1 | 29-10-2014<br>30-10-2014<br>30-10-2014 |
| US 2009140594 A1 | 04-06-2009 | EP 2063515 A2<br>US 2009140594 A1 | 27-05-2009<br>04-06-2009 |
| US 2018026487 A1 | 25-01-2018 | CN 107408855 A<br>CN 107408856 A<br>EP 3214733 A1<br>EP 3217516 A1<br>JP 6288369 B2<br>JP 6288370 B2<br>JP WO2016153001 A1<br>JP WO2016153002 A1<br>KR 20170096140 A<br>KR 20170097742 A<br>US 2018026487 A1<br>US 2018269741 A1<br>WO 2016153001 A1<br>WO 2016153002 A1 | 28-11-2017<br>28-11-2017<br>06-09-2017<br>13-09-2017<br>07-03-2018<br>07-03-2018<br>14-09-2017<br>21-09-2017<br>23-08-2017<br>28-08-2017<br>25-01-2018<br>20-09-2018<br>29-09-2016<br>29-09-2016 |
| DE 102015222367 A1 | 18-05-2017 | CN 106849440 A<br>DE 102015222367 A1 | 13-06-2017<br>18-05-2017 |
| US 2006238058 A1 | 26-10-2006 | DE 102006010168 A1<br>US 2006238058 A1 | 28-09-2006<br>26-10-2006 |
| EP 2026450 A2 | 18-02-2009 | BR PI0803507 A2<br>CN 101369751 A<br>DE 102007038601 A1<br>EP 2026450 A2<br>TR 201809566 T4 | 22-04-2009<br>18-02-2009<br>19-02-2009<br>18-02-2009<br>23-07-2018 |
| US 2011198960 A1 | 18-08-2011 | EP 2388894 A2<br>EP 2388895 A2<br>JP 5548149 B2<br>JP 2011172476 A<br>JP 2011177012 A<br>US 2011197431 A1<br>US 2011198960 A1<br>US 2011198961 A1<br>US 2011198962 A1<br>US 2011198963 A1 | 23-11-2011<br>23-11-2011<br>16-07-2014<br>01-09-2011<br>08-09-2011<br>18-08-2011<br>18-08-2011<br>18-08-2011<br>18-08-2011<br>18-08-2011 |
| JP 2011125135 A | 23-06-2011 | CN 102097873 A | 15-06-2011 |

Pour tout renseignement concernant cette annexe : voir Journal Officiel de l'Office européen des brevets, No.12/82

EPO FORM P0460

page 1 de 2

**ANNEXE AU RAPPORT DE RECHERCHE EUROPEENNE
RELATIF A LA DEMANDE DE BREVET EUROPEEN NO.**

EP 19 15 0536

20-02-2019

| Document brevet cité au rapport de recherche | Date de publication | Membre(s) de la famille de brevet(s) | Date de publication |
|---|---|---|---|
| | | JP 5089677 B2 | 05-12-2012 |
| | | JP 2011125135 A | 23-06-2011 |
| | | KR 20110066066 A | 16-06-2011 |
| US 5898251 A | 27-04-1999 | CN 1153415 A | 02-07-1997 |
| | | TW 309671 B | 01-07-1997 |
| | | US 5898251 A | 27-04-1999 |
| DE 102007025938 A1 | 18-12-2008 | DE 102007025938 A1 | 18-12-2008 |
| | | WO 2008148680 A2 | 11-12-2008 |

EPO FORM P0460

page 2 de 2

**EP 3 528 369 A1**

## RÉFÉRENCES CITÉES DANS LA DESCRIPTION

**Documents brevets cités dans la description**

- US 6417592 B
- JP 2015061370 B